(19) Europäisches Patentamt / European Patent Office / Office européen des brevets

(11) **EP 4 765 804 A1**

(12) **EUROPEAN PATENT APPLICATION**

(43) Date of publication:
**24.06.2026  Bulletin 2026/26**

(21) Application number: **24315600.7**

(22) Date of filing: **23.12.2024**

(51) International Patent Classification (IPC):
*H04N 19/11* (2014.01)        *H04N 19/176* (2014.01)
*H04N 19/593* (2014.01)       *H04N 19/70* (2014.01)

(52) Cooperative Patent Classification (CPC):
**H04N 19/593; H04N 19/11; H04N 19/176;
H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing Beijing 100085 (CN)**

(72) Inventors:
• **Plowman, Frank**
  **Beijing, 100085 (CN)**

• **Abdoli, Mohsen**
  **Beijing, 100085 (CN)**
• **Tissier, Alexandre**
  **Beijing, 100085 (CN)**
• **Ghaznavi Youvalari, Ramin**
  **Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PROVIDING A LIST OF INTRA PREDICTION MODES ORDERED BY PREDICTION EFFECTIVENESS**

(57)    A method of providing a list of a plurality of intra prediction modes (IPM) for predicting one or more blocks of a picture, orders the plurality of IPMs in the list according to an estimated effectiveness of the respective IPMs for predicting a block of the picture.

> ordering the plurality of IPMs in the list according to an
> estimated effectiveness of the respective IPMs
> for predicting a block of the picture                    — S100

Fig. 5

EP 4 765 804 A1

## Description

### Technical Field

The present disclosure generally relates to the field of encoding/decoding pictures, images or videos, and embodiments of the present disclosure concern improvements regarding a prediction. More specific embodiments of the present disclosure relate to a list of intra prediction modes (IPMs) ordered by prediction effectiveness, and to the processing of a picture using the ordered list.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding of a picture, an intra prediction using one or more intra prediction modes (IPMs) is used, and the IPMs may be signaled using a higher-than-required bit rate.

Thus, there is a need to provide further improvements for processing a picture, an image or a video using an intra prediction, e.g., when encoding and/or decoding of the picture, the image or the video.

### Summary

The present disclosure provides a method of providing a list of a plurality of intra prediction modes (IPM) for predicting one or more blocks of a picture, the method comprising:
ordering the plurality of IPMs in the list according to an estimated effectiveness of the respective IPMs for predicting a block of the picture.

The present disclosure provides a method of processing one or more blocks of a picture, the method comprising:
predicting a block of the picture using an intra prediction mode (IPM) from a list including a plurality of IPMs, wherein the IPMs in the list are ordered according to an estimated effectiveness of the respective IPMs for predicting the block.

Optionally, an effectiveness of the plurality of IPMs is estimated using contextual information of the block.

Optionally, the estimated effectiveness of the plurality of IPMs is determined using one or more IPMs derived from reconstructed samples in a neighborhood of the block, e.g., one or more decoder-side intra mode derivation (DIMD) modes.

Optionally,

the estimated effectiveness of the plurality of IPMs is determined using an absolute difference between a primary DIMD mode and the respective IPMs, and
the plurality of IPMs are ordered according to the absolute differences between the primary DIMD mode and the respective IPMs, e.g., in an ascending order.

Optionally, the estimated effectiveness of each of the plurality of IPMs is determined using a plurality of absolute differences, each absolute difference being between the IPM and a respective one of a plurality of the derived IPMs.

Optionally, the plurality of IPMs are ordered, e.g., in an ascending order, according to

- a minimum of the plurality of absolute differences, or
- a linear combination of the plurality of absolute differences.

Optionally, respective weights for the linear combination are obtained for each of the derived IPMs during a DIMD process, e.g., using an amplitude of a Histogram of Gradient (HoG) of the DIMD.

Optionally, the list is a non-most probable mode (non-MPM) list of IPMs including, e.g., 44 IPMs.

Optionally,

the plurality of IPMs comprises M IPMs, and the list comprises M list indices, wherein the IPM having the $m^{th}$-highest estimated effectiveness is assigned to a $m^{th}$ list index, with m=1...M, and
an IPM to be used for the prediction of the block is signaled using the list index of the IPM.

Optionally, the list comprises a plurality of sections, and an IPM to be used for a prediction of a block is signaled using a combination of a first indication and a second indication, wherein the first indication, like a flag, indicates the section of the list which the IPM belongs to, and the second indication, like a list index, indicates the position of the IPM within the section of the list.

Optionally, a code for signaling the second indication of a first section of the list has a first code length, and a code for signaling a second indication of the one or more remaining sections of the list has one or more second code lengths, and wherein the first code length is the shortest code length.

The present disclosure provides a non-transitory computer-readable storage medium comprising instructions which, when executed by a computer, cause the computer to carry out the method of any one of the preceding claims.

The present disclosure provides an apparatus of providing a list of a plurality of intra prediction modes (IPM) for predicting one or more blocks of a picture, the apparatus comprising:

a processing module, wherein the processing module is configured to order the plurality of IPMs in the list according to an estimated effectiveness of the respective IPMs for predicting a block of the picture.

The present disclosure provides a data stream having encoded thereinto a picture, wherein the data stream comprises:

a signaling of an intra prediction mode (IPM) for predicting a block of the picture, the IPM being from a list including a plurality of IPMs ordered according to an estimated effectiveness for a prediction, the signaling comprising:

- a first indication, like a flag, which indicates a section of the list which the IPM belongs to, and
- a second indication, like an list index, which indicates the position of the IPM within the section of the list.

The technical solutions provided according to embodiments of the present disclosure have the following beneficial effects.

In a state-of-the-art intra prediction, intra prediction modes IPMs of a non-most-probable-mode (non-MPM) list are simply ordered according to the IPM indices associated with the IPMs, e.g., in ascending order, since it is assumed that all of the IPMs in the non-MPM list, also referred to as non-MPM modes, are all equally effective. However, in practice, not all IPMs in the non-MPM list are equally likely so that the state-of-the-art may use codewords for signaling the IPM indices of the IPMs which are longer than necessary for the non-MPM modes which are more likely to be effective than other non-MPM modes. This results in a higher-than-required bitrate.

Embodiments of the present disclosure address the shortcomings in the prior art by ordering of the IPMs in the non-MPM list not according to the IPM indices but according to an effectiveness of the IPMs, which may be estimated from contextual information. Thus, when using, e.g., an approximately flat truncated binary code for signaling an index of the non-MPM list, more likely non-MPM modes are assigned to shorter codewords representing the lower IPM indices with which the IPMs are associated, while less likely non-MPM modes are assigned to longer codewords.

The present disclosure is advantageous because IPMs which are more likely and, therefore are likely to be signaled more often than less likely IPMs, use shorter codewords so that the required bitrate for signaling the IPMs is reduced.

It is to be understood that the content described in this section is not intended to identify key or critical features of the embodiment of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

Fig. 1    is a block diagram of a conventional video encoder,

Fig. 2    is a block diagram of a conventional video decoder,

Fig. 3    illustrates angular Intra Prediction Modes (IPMs) in VVC and ECM,

Fig. 4    illustrates a non-MPM list construction process in ECM-14,

Fig. 5    illustrates a flow diagram of a method of providing a list of a plurality of intra prediction modes (IPM) for predicting one or more blocks of a picture in accordance with embodiments of the present disclosure,

Fig. 6    illustrates a non-MPM mode sorting by distance to a primary DIMD mode in accordance with embodiments of the present disclosure,

Fig. 7    illustrates a decoder-side process of an adapted non-MPM signaling in accordance with embodiments of the present disclosure,

Fig. 8    illustrates a flow diagram of a method of processing one or more blocks of a picture in accordance with embodiments of the present disclosure,

Fig. 9    illustrates a flow diagram of a method for decoding an encoded data stream in accordance with embodiments of the present disclosure,

Fig. 10 illustrates a flow diagram of a method for encoding a picture into an encoded data stream in accordance with embodiments of the present disclosure,

Fig. 11 illustrates a block diagram of an apparatus of providing a list of a plurality of intra prediction modes (IPM) for predicting one or more blocks of a picture in accordance with embodiments of the present disclosure,

Fig. 12 illustrates a block diagram of an apparatus of processing one or more blocks of a picture in accordance with embodiments of the present disclosure,

Fig. 13 illustrates a block diagram of a decoder for decoding an encoded data stream in accordance with embodiments of the present disclosure,

Fig. 14 illustrates a block diagram of an encoder for encoding a picture into an encoded data stream in accordance with embodiments of the present disclosure,

Fig. 15 illustrates a data stream in accordance with embodiments of the present disclosure, and

Fig. 16 illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

*Standard Video Coder*

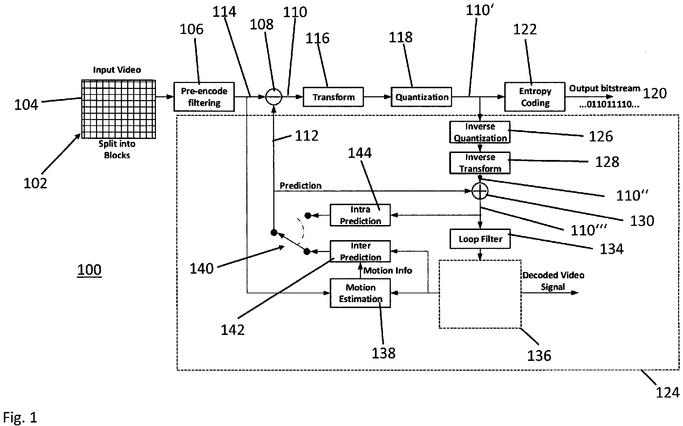

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110''' that may serve as a reference data for predicting future CUs or blocks to encode. The quantized transform coefficients 110' are de-quantized and inverse transformed leading to a decoded prediction CU or block 110'', and the decoded prediction residuals and the predicted block are then combined at 130, typically summed, so as to provide the reconstructed block or CU 110''''. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

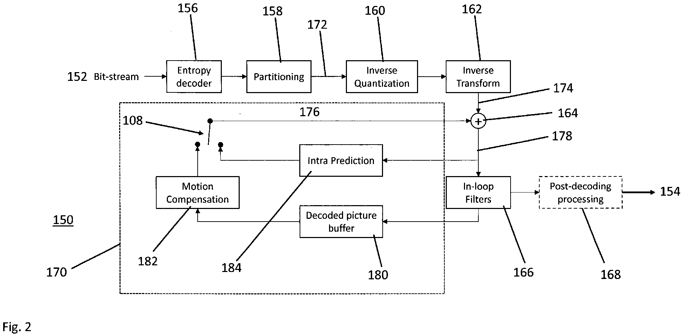

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

*Angular Intra Prediction Mode (IPM) in VVC and ECM*

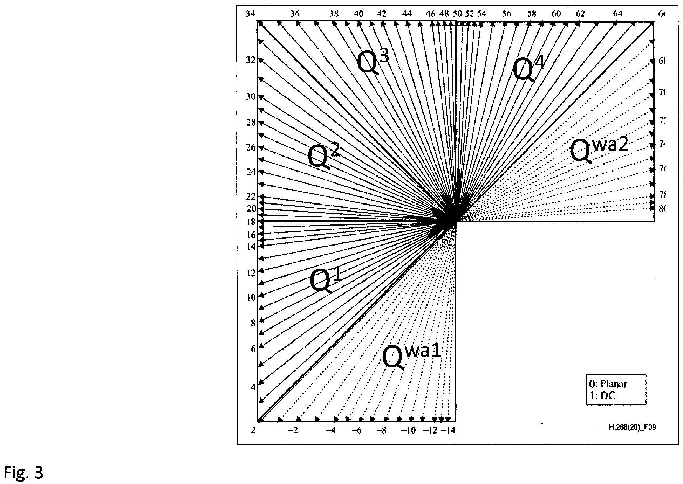

There exists a set of 67 Intra Prediction Modes (IPMs) in both VVC and ECM, including two non-angular modes of DC and Planar (index 0 and 1), along with 65 angular modes (indexed as 2,3,..66). The initial set of 65 angular IPMs may be extended to so-called wide-angle modes (indexed as -14,-13,....,-1 and 67,68,...,80), depending on block characteristics such as width/height ratio. Fig 3 illustrates the angular Intra Prediction Modes (IPMs) in VVC and ECM. In Fig. 3, the solid lines (indices) indicate non-wide-angle IPMs and the dashed lines (indices) indicate wide-angle IPMS. The set of IPMs is divided into four non-wide-angle quarters or quadrants $Q^1$, $Q^2$, $Q^3$ and $Q^4$ of angular intra prediction directions, as well as two wide-angle quarters or quadrants $Q^{wa1}$ and $Q^{wa2}$ of angular intra prediction directions.

*Most Probable Modes*

When it comes to signaling that a particular IPM should be used for a particular coding unit, the mode or IPM is not signaled directly in the bitstream. Instead, most probable modes (MPMs) which are particularly likely to be used for that coding unit are identified using contextual information. These MPMs are then put into one or more MPM lists. For example in ECM, 6 modes which are determined to be likely are placed in a primary MPM list and the 16 modes judged to be the next most likely modes are placed in a secondary MPM list, making for a total of 22 MPMs. The remaining modes are the non-MPMs. The non-MPMs are placed in the non-MPM list by successively assigning the lowest non-MPM the lowest non-MPM index which is not yet in use by another non-MPM.

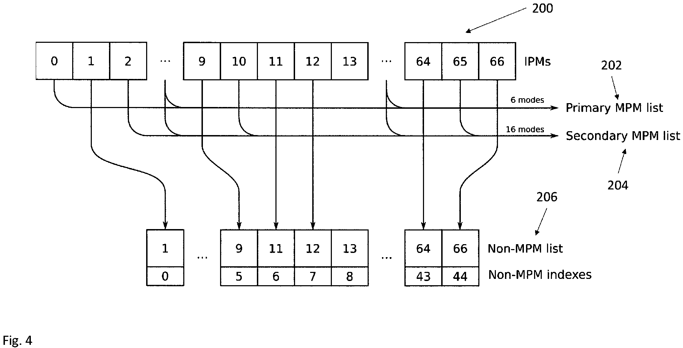

Fig. 4 illustrates the non-MPM list construction process in ECM-14. Fig. 4 illustrates the above mentioned initial set 200 of 65 angular IPMs. Initially, the 6 most likely IPMs are placed in the primary MPM list 202 so as to be associated with respective primary MPM indexes. Then the 16 modes judged to be the next most likely modes are placed in the secondary MPM list 204 so as to be associated with respective secondary MPM indexes. The remaining modes are the non-MPMs which are placed in the non-MPM list 206 by successively assigning the lowest non-MPM the lowest non-MPM index which is not yet in use by another non-MPM. As is shown, the non-MPM IPMs are added to the non-MPM list according to the IPM mode number (1...9, 11, 12, 13, ... 64, 65) so as to be associated with the non-IPM indexes 0 to 44.

What is ultimately signaled, is not the IPMs (the IPM numbers) themselves but instead flags which indicate which of these lists the desired IPM belongs to, and the indexes which identify the particular mode from within the specified list. In ECM-14, a primary MPM index is signaled using a truncated unary code, a secondary MPM index is signaled using a fixed-length code and a non-MPM index is signaled using a truncated binary code. This signaling scheme is beneficial as the MPMs can be signaled using shorter codewords than the non-MPMs. Assuming the algorithm or process used to select the MPMs is accurate, this results in a reduction in bitrate.

*Truncated binary codes*

As mentioned above, the non-MPM index is signaled using a truncated binary code. Truncated binary codes can be thought of as a best-effort fixed length code for syntax elements which may take a number of values which is not a power of two. For example, a syntax element which takes 32 values [0..31] can be signaled using a fixed-length 5 bit code, usually using a conventional place-value notation as shown in Table 1 below.

*Table 1: Fixed-length 5-bit code*

| Value | Codeword |
|-------|----------|
| 0 | 00000 |
| 1 | 00001 |
| 2 | 00010 |
| ⋮ | ⋮ |
| 16 | 10000 |
| ⋮ | ⋮ |
| 30 | 11110 |
| 31 | 11111 |

Fixed-length codes cannot trivially be extended to support syntax elements which take a number of values that is not a power of two. For instance, if the code from Table 1 is to be extended to allow 33 values in [0..32], the 6-bit codeword 100000 cannot simply be added to the table as the first 5 bits of this codeword are the same as the codeword already in the table for value 16. Consequently, it is not be possible to distinguish value 16 from value 32. For example, if a syntax element which takes 33 values is signaled using a fixed-length code, one has to use at least a 6-bit code, however, then 64 - 33 = 31 or 48% of the values are never signaled, which introduces redundancy and ultimately an excess bitrate.

Truncated binary codes resolve this issue. They provide an approximately fixed-length code for syntax elements which can take any number of values. For a syntax element which takes $N$ values, truncated binary codes assign $\lfloor log_2 N \rfloor$ bit codewords to the smallest values and $\lceil log_2 N \rceil$ bit codewords to the largest values, where $\lfloor x \rfloor$ and $\lceil x \rceil$ denote the largest integer less than or equal to $x$ and the smallest integer greater than or equal to than $x$, respectively. Table 2 below shows selected values from a 45 element truncated binary code used to signal the non-MPM index (see Fig.

4). Non-MPM indexes [0..18] are given 5-bit codewords while non-MPM indexes [19..44] are given 6-bit codewords.

*Table 2: 45 element truncated binary code*

| Value | Codeword |
|---|---|
| **0** | 00000 |
| **1** | 00001 |
| **2** | 00010 |
| ⋮ | ⋮ |
| **17** | 10001 |
| **18** | 10010 |
| **19** | 100110 |
| **20** | 100111 |
| ⋮ | ⋮ |
| **43** | 111110 |
| **44** | 1111111 |

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = Floor( Log2( Gx ) )$$

$$normDiff = ( ( Gx << 4 ) >> x ) \& 15$$

$$x += ( 3 + ( normDiff != 0 ) ? 1 : 0 )$$

$$Orient = (Gy* ( DivSigTable[ normDiff ] | 8 ) + ( 1 << ( x-1 ) )) >> x$$

where

$$DivSigTable[16] = \{ 0, 7, 6, 5, 5, 4, 4, 3, 3, 2, 2, 1, 1, 1, 1, 0 \}.$$

For a block of size $W \times H$, the weight for each of the five derived modes is modified if one of the above or left histogram magnitudes is twice as large as the other one. In this case, the weights are location dependent and computed as follows:

If the above histogram is twice the left, then:

$$w_i(x, y) = wDimd_i + \Delta_i - 2\Delta_i \frac{y}{(H-1)}.$$

If the left histogram is twice the above, then:

$$w_i(x, y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

The above described conventional binarization of the non-MPM index assumes that the non-MPM indexes are all equally effective. More specifically, an approximately flat truncated binary code is used with no effort to assign more likely non-MPM modes to the shorter codewords from this code. In practice, not all non-MPM modes are equally likely, and more likely modes can be determined from contextual information. Consequently, the state-of-the-art uses codewords which are longer than necessary for the non-MPM modes which are likely to be effective, resulting in a higher-than-required bitrate. Stated differently, in a state-of-the-art intra prediction, intra prediction modes IPMs of a non-most-probable-mode (non-MPM) list are simply ordered according to the IPM indices associated with the IPMs, e.g., in ascending order, since it is assumed that all of the IPMs in the non-MPM list, also referred to as non-MPM modes, are all equally effective. However, in practice, not all IPMs in the non-MPM list are equally likely so that the state-of-the-art may use codewords for signaling the IPM indices of the IPMs which are longer than necessary for the non-MPM modes which are more likely to be effective than other non-MPM modes. This results in a higher-than-required bitrate.

Embodiments of the present disclosure address the shortcomings in the prior art by ordering of the IPMs in the non-MPM list not according to the IPM indices but according to an effectiveness of the IPMs, which may be estimated from contextual information. Thus, when using, e.g., an approximately flat truncated binary code for signaling the IPM indices of the IPMs from the non-MPM list, more likely non-MPM modes are assigned to shorter codewords representing the lower IPM indices with which the IMPs are associated, while less likely non-MPM modes are assigned to longer codewords.

The present disclosure is advantageous because IPMs which are more likely and, therefore, are likely to be signaled more often than less likely IPMs, use shorter codewords so that the required bitrate for signaling the IPMs is reduced.

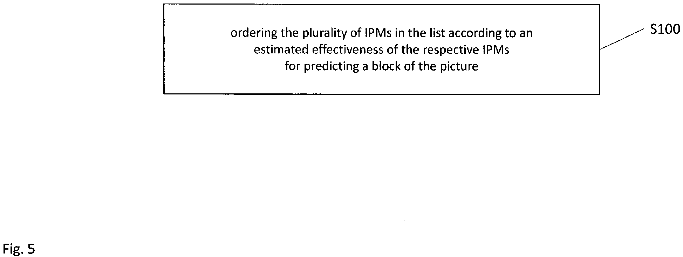

Fig. 5 illustrates a flow diagram of an embodiment of a method of providing a list of a plurality of intra prediction modes (IPM) for predicting one or more blocks of a picture. The method includes:

S100: Ordering the plurality of IPMs in the list according to an estimated effectiveness of the respective IPMs for predicting a block of the picture.

Thus, embodiments of the present disclosure provide IPMs of an IPM list, like a non-MPM list, which are not ordered according to their index but according to an estimated effectiveness of the respective IPMs for predicting one or more blocks of the picture.

In accordance with embodiments of the present disclosure, contextual information is used, e.g., a primary mode derived by DIMD, to identify non-MPM modes which are more likely to be effective than others. An absolute difference between the primary DIMD mode and the non-MPM modes is used as an indicator of the effectiveness of the non-MPM modes. Based on this, the non-MPM list is reordered and shorter codewords are assigned to more likely modes. In accordance with further embodiments, some or all of the modes derived by DIMD, not just the primary mode, may be used to identify non-MPMs which are likely to be effective. Yet further embodiments concern a modification to the non-MPM index binarization to better reflect the distribution of the expected effectiveness of the non-MPM modes.

In accordance with embodiments of the present disclosure, the order of the non-MPM modes in the non-MPM list is determined according to an absolute difference between each of the non-MPM modes and a primary decoder side intra mode derivation (DIMD) mode.

In accordance with embodiments of the present disclosure, the order of the non-MPM modes in the non-MPM list is based on an ascending order of the absolute difference between the non-MPM modes and the primary DIMD mode.

In accordance with embodiments of the present disclosure, the order of the non-MPM modes in the non-MPM list is determined according to a function of absolute differences between each of the non-MPM modes and each of a plurality of DIMD modes.

In accordance with embodiments of the present disclosure, each non-MPM mode is associated to an overall distance that is computed as a weighted average of the absolute differences of said non-MPM mode from each of the DIMD modes, and the overall distance is used to sort the non-MPM modes in the non-MPM list. The weighted average of the absolute differences may be considered equivalent to a linear combination since the computed values are only compared to one another, but their absolute magnitude does not matter.

In accordance with embodiments of the present disclosure, the weighting mechanism for the average distance uses an amplitude of a Histogram of Gradient (HoG) of the DIMD process.

In accordance with embodiments of the present disclosure, fixed weights are used for determining or computing the overall distance.

In accordance with embodiments of the present disclosure, a non-MPM mode is signaled using a combination of a flag which indicates which section of the non-MPM list the desired non-MPM mode belongs to, and an index which indicates the position of the desired non-MPM mode within that section of the list.

In accordance with embodiments of the present disclosure, the flag indicates whether the non-MPM mode is among the first N elements of the non-MPM list and the index within these N modes is signaled using a fixed-length code.

In accordance with embodiments of the present disclosure, the value of N is selected to be 16.

In accordance with embodiments of the present disclosure, the flag indicating which section of the non-MPM list the desired non-MPM mode belongs to is coded using at least one Context-Aware Binary Arithmetic Coding (CABAC) context.

Embodiments of the present disclosure are now described in more detail.

In this disclosure, the term *non-MPM modes* or *NMPMMode*[$k$], $k \in [0..44]$, refers to the set of IPMs (see Fig. 4) which are not put in any MPM list, i.e., are neither in the primary MPM list nor the secondary MPM list. The term *non-MPM list* or *NMPMList[k], k* E [0..44], refers to the non-MPM modes along with an associated *non-MPM index,* which constitutes an ordering of the non-MPM modes. The term *non-MPM index signaling* refers to how a non-MPM index is written to or read from a bitstream.

It is noted that embodiments of this disclosure refer to the scheme in ECM, in which there are 67 IPMs, with 6 IPMs in the primary MPM list, 16 IPMs in the secondary MPM list and therefore 45 modes in the non-MPM list. However, the present disclosure is not limited to these embodiments. In accordance with other embodiments, the inventive approach may be applied to any list of IPMs to be used for predicting one or more blocks of a picture. The inventive approach may be used with a different number of IPMs, a different number of MPM lists or differently-sized MPM lists.

*Using primary DIMD mode as the pivot point for reordering non-MPM*

The non-MPM modes having indexes similar to the primary DIMD mode, which is likely to be effective for the prediction, are considered to yield, e.g., in the case of angular IPMs, predictions similar to the primary DIMD mode. Therefore, in accordance with embodiments, the non-MPM modes are sorted in ascending order of the absolute difference between the non-MPM modes and the primary DIMD mode. The result is that modes with indexes similar to the primary DIMD mode are placed near the beginning or front of the list so as to be assigned to indexes that may be signaled using codewords having a first length, while modes which are dissimilar to the primary DIMD mode are placed towards the end of the list and, thereby, are assigned to indexes that are signaled using codewords having a second length, the first length being shorter than the second length. For example, when using the above described truncated binary binarization scheme, the non-MPM modes at the front of the list are assigned shorter codewords than those towards the end of the list.

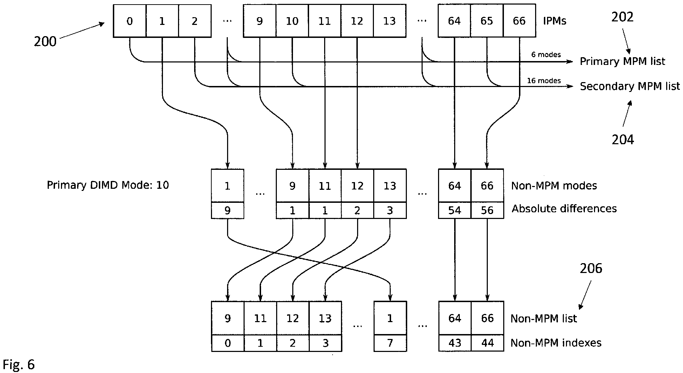

Fig. 6 illustrates a non-MPM mode sorting by distance to a primary DIMD mode in accordance with embodiments of the present disclosure. Similar to Fig. 4, from the initial set 200 of 65 angular IPMs, the 6 most likely IPMs are placed in the primary MPM list 202 so as to be associated with respective primary MPM indexes, and the 16 modes judged to be the next most likely modes are placed in the secondary MPM list 204 so as to be associated with respective secondary MPM indexes. The remaining modes are the non-MPMs which are processed in accordance with the inventive approach. Starting with the complete set 200 of IPMs, some modes are chosen for the primary and secondary MPM lists 202, 204 and those which remain are the non-MPM modes. Each of these non-MPM modes is associated with its absolute difference from the primary DIMD mode as follows:

$$AbsDiff[NMPMMode[k]] = |PrimaryDIMD - NMPMMode[k]| \quad for\ k \in [0..44]$$

For the embodiment shown in Fig. 6, the primary DIMD mode is 10 so the first non-MPM mode, IPM 1, is associated with an absolute difference:

$$|10 - 1| = 9$$

Thus the absolute differences for the illustrated non-MPM modes is as follows:

- IPM 1 absolute difference = 9
  ...
- IPM 9 absolute difference = 1
- IPM 11 absolute difference = 1
- IPM 12 absolute difference = 2
- IPM 13 absolute difference = 3
  ...
- IPM 64 absolute difference = 54
- IPM 66 absolute difference = 56

To assign non-MPM indexes to each of the non-MPM modes, i.e., to construct the non-MPM list 206, the non-MPM modes are sorted in ascending order of the absolute differences. In other words the list is sorted such that:

$$AbsDiff[NMPMList[k]] \le AbsDiff[NMPMList[k+1]] \quad for\ k \in [0..44]$$

In case two modes have the same absolute difference the lower mode may be placed first, or the higher mode may be placed first, or the order may be disambiguated in some other way. In the embodiment of Fig. 6, IPM 9 and IPM 11 have the same absolute difference, and the lower mode, IPM 9 in Fig. 6, is be placed first, followed by the higher mode, IPM 11 in Fig. 6.

*Using multiple DIMD modes to reorder the non-MPM list*

The DIMD process derives five DIMD modes in total. In accordance with embodiments, rather than using only the primary DIMD, the absolute difference between some or all of the four non-primary DIMD modes and the non-MPM modes may be used for ordering of the non-MPM list.

In accordance with an embodiment, the non-MPM list is constructed by sorting the non-MPM modes according to a minimum of the absolute difference between the non-MPM mode and the primary DIMD mode and the non-MPM mode and the secondary DIMD mode:

$$MinAbsDiff[NMPMMode[k]] = min\ (|PrimaryDIMD - NMPMMode[k]|,$$
$$|SecondaryDIMD - NMPMMode[k]|)$$

In accordance with another embodiment, the non-MPM list is sorted according to a linear combination of the absolute differences between the DIMD modes and the non-MPM mode:

$$LinCombAbsDiff[NMPMMode[k]] = \sum_{j=1}^{N} \alpha_j |DIMDMode_j - NMPMMode[k]|$$

where the weights $\alpha_j$ may be determined using the order of the corresponding modes in the DIMD list, with the fusion weights derived for each of the modes during the DIMD process or some other information. In accordance with embodiments, the weights may be obtained using an amplitude of a Histogram of Gradient (HoG) of the DIMD process.

In accordance with other embodiments, fixed weights may be used for determining or computing the overall distance.

*Adapted non-MPMsignaling*

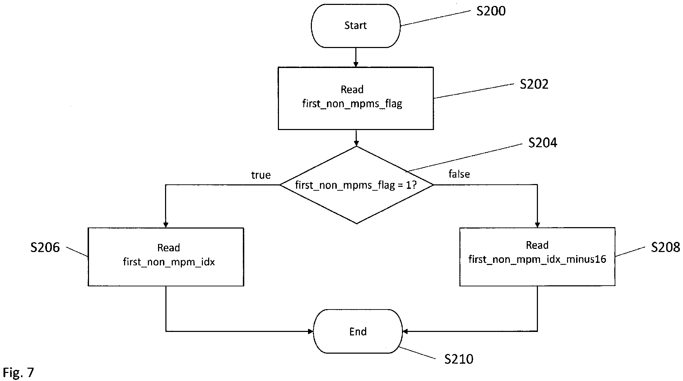

In accordance with embodiments, the truncated binary binarization scheme for non-MPM indexes is replaced with a new binarization scheme for signaling the IPMs from the IPM list ordered according to the estimated effectiveness of the IPMs. Fig. 7 illustrates an embodiment of a decoder-side process of the new or adapted non-MPM signaling. The process starts as S200, and at S202 the flag first_non_mpms_flag is read which indicates whether the non-MPM mode is among the first 16 elements of the non-MPM list. At S204 it is determined whether the flag first_non_mpms_flag is set. If the mode is among the first 16 elements of the non-MPM list (first_non_mpms_flag = true), its index first_non_mpm_idx is signaled and read at S206. If the mode is not be among the first 16 elements of the non-MPM list (first_non_mpms_flag = false), its index minus 16 (first_non_mpm_idx_minus16) is signaled and read at S208. The decoder-side process ends at S210. This scheme may be generalized to a different number of modes in the first part of the non-MPM list, or the non-MPM list may be split into more than two parts. In accordance with embodiments, the flag first_non_mpms_flag may be coded using Context-Aware Binary Arithmetic Coding (CABAC).

*Granularity of use of the ordered IPM list*

In accordance with embodiments of the present disclosure, the inventive approach may be applied with a certain granularity such as an entire sequence, an entire frame or picture, a coding tree unit (CTUs) or a coding unit (CUs). In accordance with embodiments, the ordered IPM list may be used at:

- a sequence-level at which the ordered IPM list is used for all coding units (CUs) in all coding tree units (CTUs) of all frames of a video content, or
- a frame-level at which the ordered IPM list is used for all coding units (CUs) of all coding tree units (CTUs) in a frame or picture, or
- a CTU-level at which at which the ordered IPM list is used for a currently processed coding tree unit (CTU), or
- a CU-level at which the ordered IPM list is used for a currently processed coding unit (CU).

*Processing Method*

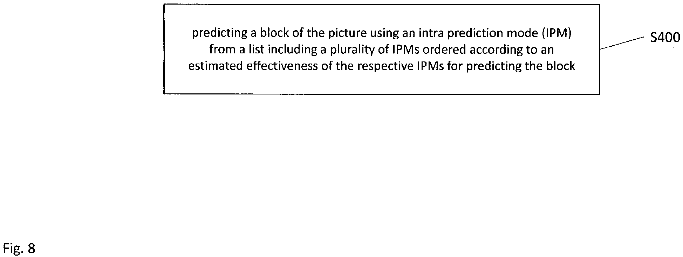

Fig. 8 illustrates a flow diagram of an embodiment of a method of processing one or more blocks of a picture. The method includes:

S400: Predicting a block of the picture using an intra prediction mode (IPM) from a list including a plurality of IPMs, wherein the IPMs in the list are ordered according to an estimated effectiveness of the respective IPMs for predicting the block.
The list of IPMs may be ordered according embodiments described above.

*Decoding Method*

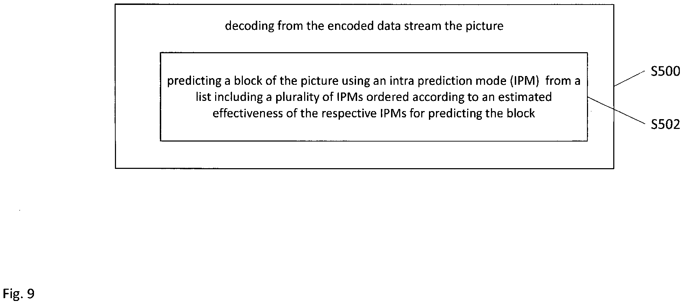

Fig. 9 illustrates a flow diagram of a method for decoding an encoded data stream, the encoded data stream including data representing a picture. The method includes the following:
S500: Decoding from the encoded data stream the picture, wherein decoding the picture comprises predicting S502 a block of the picture using an intra prediction mode (IPM) from a list including a plurality of IPMs, wherein the IPMs in the list are ordered according to an estimated effectiveness of the respective IPMs for predicting the block.

*Encoding Method*

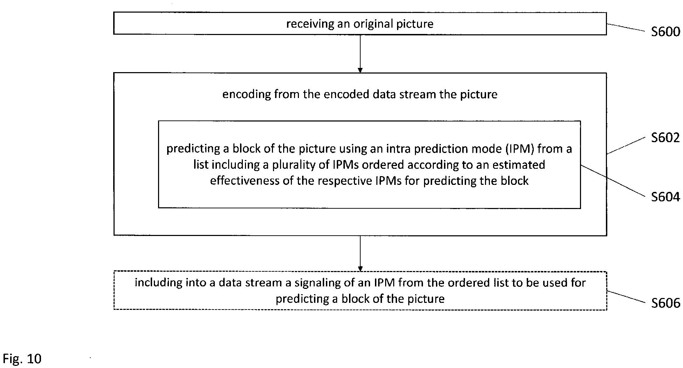

Fig. 10 illustrates a flow diagram of a method for encoding a picture into an encoded data stream. The encoded data stream includes data representing the picture and the method includes the following:
S600: Receiving an original picture.

S602: Encoding the picture into the encoded data stream, wherein encoding the picture comprises predicting S604 a block of the picture using an intra prediction mode (IPM) from a list including a plurality of IPMs, wherein the IPMs in the list are ordered according to an estimated effectiveness of the respective IPMs for predicting the block.
Optionally, the method comprises including S606 into the data stream or bitstream a signaling of an IPM from the ordered list to be used for predicting a block of the picture. The signaling may indicate an intra prediction mode (IPM) for predicting a block of the picture, with the IPM being from a list including a plurality of IPMs ordered according to an estimated effectiveness for a prediction. The signaling may include:

- a first indication, like a flag, which indicates a section of the list which the IPM belongs to, and
- a second indication, like an list index, which indicates the position of the IPM within the section of the list.

*Further embodiments*

In the embodiments described so far the IPMs are ordered according to their effectiveness at a first peer device, like an encoder, and the IPM to be used for the prediction of a currently processed block may be indicated to a second peer device, like a decoder, by signaling the index of the IPM to be used. However, the present disclosure is not limited to such embodiments. In accordance with other embodiments, rather than signaling the index, the IPM to be used may be signaled explicitly. In accordance with yet other embodiments, rather than signaling the index or the IPM, a part of the list or the entire list containing the IPMs ordered according to the effectiveness may be signaled or transmitted, so that the peer side, e.g., a decoder, is aware of IPMs having a good estimated effectiveness.

In accordance with embodiments described herein, determining the effectiveness and ordering the IPMs accordingly may be performed at one entity or device (by the same entity), e.g., at an encoder or at a decoder. However, the present disclosure is not limited to such embodiments. In accordance with other embodiments, this process may be split among respective devices. More specifically, rather than estimating the effectiveness and ordering the IPMs accordingly at the same entity or device, e.g., at an encoder or at a decoder, the effectiveness of the IPMs may be estimated at a first entity or first peer, like an encoder, and the estimated effectiveness of the respective IPMs may be signaled or send to a second entity or second peer device, like a decoder, thereby allowing the second entity to perform the ordering of the IPMs according to the received estimated effectiveness.

So far, the inventive concept has been described with reference to aspects and embodiments concerning methods of providing the list of IPMs ordered according to their estimated effectiveness, and methods of processing one or more blocks of a picture using the ordered list, e.g., for decoding and/or for encoding. In accordance with further embodiments, the present disclosure also provides an apparatus of providing the list of IPMs ordered according to their estimated effectiveness, and an apparatus of processing one or more blocks of a picture as encoders/decoders including such an apparatus.

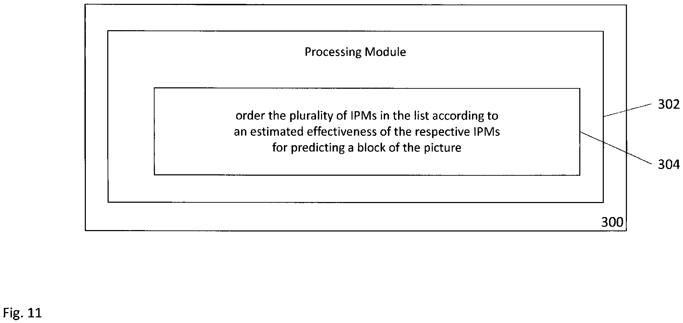

Fig. 11 illustrates a block diagram of an apparatus 300 of providing a list of a plurality of intra prediction modes (IPM) for predicting one or more blocks of a picture in accordance with embodiments of the present disclosure. The apparatus 300 includes a processing module 302. The processing module 302 is configured to order 304 the plurality of IPMs in the list according to an estimated effectiveness of the respective IPMs for predicting a block of the picture.

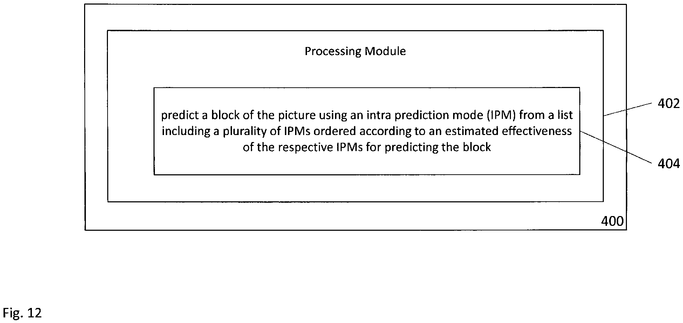

Fig. 12 illustrates a block diagram of an apparatus 400 of predicting one or more blocks of a picture in accordance with embodiments of the present disclosure. The apparatus 400 includes a processing module 402. The processing module 402 is configured to predict 404 a block of the picture using an intra prediction mode (IPM) from a list including a plurality of IPMs, wherein the IPMs in the list are ordered according to an estimated effectiveness of the respective IPMs for predicting the block.

In accordance with embodiments, the processing module 402 includes an apparatus as described with reference to Fig. 11.

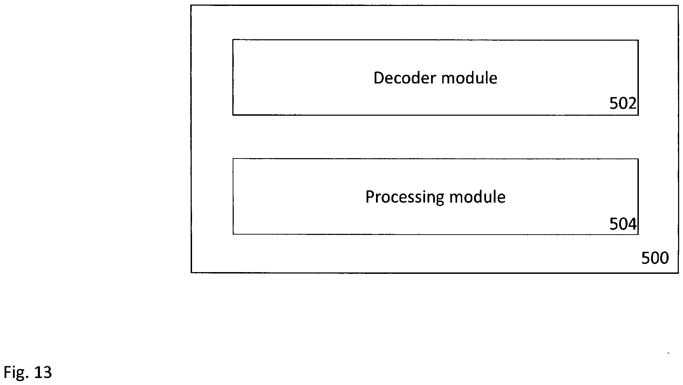

Fig. 13 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 11 and/or an apparatus as described with reference to Fig. 12.

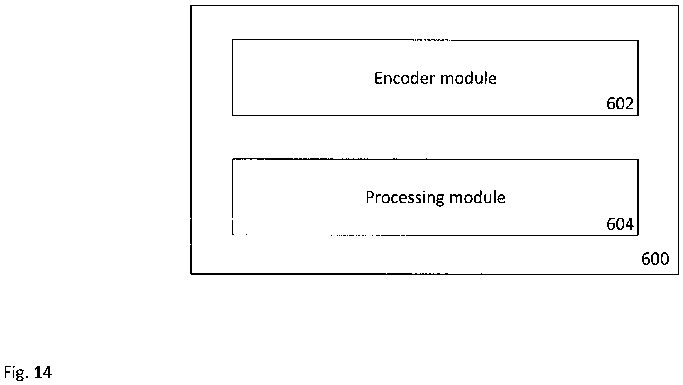

Fig. 14 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 11 and/or an apparatus as described with reference to Fig. 12..

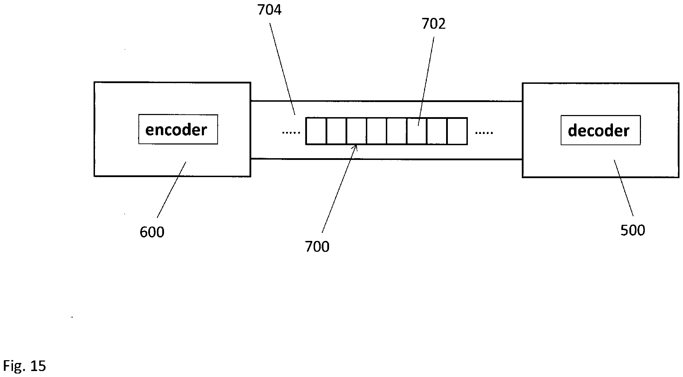

Fig. 15 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication of an IPM from the ordered list to be used for predicting a block of the picture. The signaling may indicate an intra prediction mode (IPM) for predicting a block of the picture, with the IPM being from a list including a plurality of IPMs ordered according to an estimated effectiveness for a prediction. The signaling may include:

- a first indication, like a flag, which indicates a section of the list which the IPM belongs to, and
- a second indication, like an list index, which indicates the position of the IPM within the section of the list.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

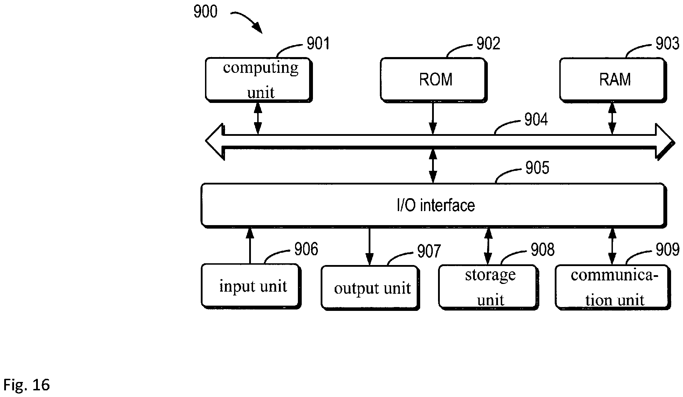

Fig. 16 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of providing a list of a plurality of intra prediction modes (IPM) for predicting one or more blocks of a picture, the method comprising:
ordering the plurality of IPMs in the list according to an estimated effectiveness of the respective IPMs for predicting a block of the picture.

A 2nd embodiment provides the method of the 1st embodiment, wherein an effectiveness of the plurality of IPMs is estimated using contextual information of the block.

A 3rd embodiment provides the method of the 1st or 2nd embodiment, wherein the estimated effectiveness of the plurality of IPMs is determined using one or more IPMs derived from reconstructed samples in a neighborhood of the block, e.g., one or more decoder-side intra mode derivation (DIMD) modes.

A 4th embodiment provides the method of the 3rd embodiment, wherein the estimated effectiveness of the plurality of IPMs is determined using an absolute difference between one of the derived IPMs and the respective IPMs.

A 5th embodiment provides the method of the 4th embodiment, wherein the one derived IPM is a primary DIMD mode.

A 6th embodiment provides the method of the 4th or 5th embodiment, wherein the plurality of IPMs are ordered according to the absolute differences between the derived IPM and the respective IPMs, e.g., in an ascending order.

A 7th embodiment provides the method of the 3rd embodiment, wherein the estimated effectiveness of each of the plurality of IPMs is determined using a plurality of absolute differences, each absolute difference being between the IPM and a respective one of a plurality of the derived IPMs.

An 8th embodiment provides the method of the 7th embodiment, wherein the plurality of IPMs are ordered, e.g., in an ascending order, according to a minimum of the plurality of absolute differences.

A 9th embodiment provides the method of the 7th or 8th embodiment, wherein the plurality of absolute differences comprises a first absolute difference between a primary DIMD mode and the IPM, and a second absolute difference between a secondary DIMD mode and the IPM.

A 10th embodiment provides the method of the 7th embodiment, wherein the plurality of IPMs are ordered, e.g., in an ascending order, according to a linear combination of the absolute differences b.

An 11th embodiment provides the method of the 10th embodiment, wherein respective weights for the linear combination are obtained for each of the derived IPMs during a DIMD process, e.g., using an amplitude of a Histogram of Gradient (HoG) of the DIMD.

A 12th embodiment provides the method of the 10th embodiment, wherein respective weights for the linear combination are fixed weights.

A 13th embodiment provides the method of any one of the preceding embodiments, wherein the list is a non-most probable mode (non-MPM) list of IPMs including, e.g., 44 IPMs.

A 14th embodiment provides the method of any one of the preceding embodiments, wherein the plurality of IPMs are selected from a set of IPMs and included into the non-most probable mode (non-MPM) list.

A 15th embodiment provides the method of any one of the preceding embodiments, wherein the set of IPMs includes

- a first number of IPMs, e.g., 6 IPMs, included into a primary most probable mode (PMPM) list including
- a second number of IPMs, e.g., 16 IPMs, included into a secondary most probable mode (SMPM) list, and
- the plurality of IPMs included in the non-most probable mode (non-MPM) list.

A 16th embodiment provides the method of any one of the preceding embodiments, wherein each entry in the list has assigned a list index, and wherein the plurality of IPMs in the list is ordered by assigning each of the plurality of IPMs to a list index according to the estimated effectiveness of the IPM.

A 17th embodiment provides the method of any one of the preceding embodiments, wherein the plurality of IPMs comprises M IPMs, and the list comprises M list indices, wherein the IPM having the mth-highest estimated effectiveness is assigned to a mth list index, with m=1...M.

An 18th embodiment provides the method of any one of the preceding embodiments, wherein an IPM to be used for the prediction of the block is signaled using the list index of the IPM.

A 19th embodiment provides the method of any one of the preceding embodiments, wherein the list comprises a plurality of sections, and an IPM to be used for a prediction of a block is signaled using a combination of a first indication and a second indication, wherein the first indication, like a flag, indicates the section of the list which the IPM belongs to, and the second indication, like a list index, indicates the position of the IPM within the section of the list.

A 20th embodiment provides the method of the 19th embodiment, wherein the second indication is signaled using a fixed-length code.

A 21st embodiment provides the method of the 19th or 20th embodiment, wherein a code for signaling the second indication of the first section has a first code length, and a code for signaling the second indication of the remaining sections has one or more second code lengths, and wherein the first section has the shortest code length.

A 22nd embodiment provides the method of any one of the 19th to 21st embodiments, wherein the first indication indicates whether the IPM is among the first N, e.g. 16, elements of the list, and, when the IPM is among the first N elements, the index is signaled using a fixed-length code.

A 23rd embodiment provides the method of any one of the 19th to 22nd embodiments, wherein the first indication is coded using at least one Context-Aware Binary Arithmetic Coding (CABAC) context.

A 24th embodiment provides a method of processing one or more blocks of a picture, the method comprising:

providing a list of IPMs, the list ordered according to the method of any one of the preceding embodiments, and predicting a block of the picture using an intra prediction mode (IPM) from the ordered list.

A 25th embodiment provides a method of processing one or more blocks of a picture, the method comprising: predicting a block of the picture using an intra prediction mode (IPM) from a list including a plurality of IPMs, wherein the IPMs in the list are ordered according to an estimated effectiveness of the respective IPMs for predicting the block.

A 26th embodiment provides a method for decoding an encoded data stream, the encoded data stream including data representing a picture, and the method comprising:

decoding from the encoded data stream the picture, wherein decoding the picture comprises processing one or more blocks of the picture according to the method of the 24th or 25th embodiment.

A 27th embodiment provides a method for encoding a picture into an encoded data stream, the encoded data stream including data representing the picture, and the method comprising:

receiving a picture, and encoding the picture into the encoded data stream, wherein encoding the picture comprises processing one or more blocks of the picture according to the method of the 24th or 25th embodiment.

A 28th embodiment provides a non-transitory computer-readable storage medium comprising instructions which, when executed by a computer, cause the computer to carry out the method of any one of the preceding embodiments.

A 29th embodiment provides an apparatus of providing a list of a plurality of intra prediction modes (IPM) for predicting one or more blocks of a picture, the apparatus comprising:
a processing module, wherein the processing module is configured to order the plurality of IPMs in the list according to an estimated effectiveness of the respective IPMs for predicting a block of the picture.

A 30th embodiment provides an apparatus of processing one or more blocks of a picture, the apparatus comprising:
a processing module, wherein the processing module is configured to predict a block of the picture using an intra prediction mode (IPM) from a list including a plurality of IPMs, wherein the IPMs in the list are ordered according to an estimated effectiveness of the respective IPMs for predicting the blocks.

A 31st embodiment provides an apparatus for decoding an encoded data stream, the encoded data stream including data representing a picture, the apparatus comprising:

a decoder module configured to decode from the encoded data stream the picture, and a prediction module, the prediction module including an apparatus according to the 29th or 30th embodiment.

A 32nd embodiment provides an apparatus for encoding a picture into an encoded data stream, the encoded data stream including data representing the picture, the apparatus comprising:

an encoder module configured to receive a picture and to encode the picture into the encoded data stream, and a prediction module, the prediction module including an apparatus according to the 29th or 30th embodiment.

A 33rd embodiment provides a data stream having encoded thereinto a picture, wherein the data stream comprises:
a signaling of an intra prediction mode (IPM) for predicting a block of the picture, the IPM being from a list including a plurality of IPMs ordered according to an estimated effectiveness for a prediction, the signaling comprising:

- a first indication, like a flag, which indicates a section of the list which the IPM belongs to, and
- a second indication, like an list index, which indicates the position of the IPM within the section of the list.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-1/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end user/current_document.php?id=13915

**Claims**

1.  A method of providing a list of a plurality of intra prediction modes (IPM) for predicting one or more blocks of a picture, the method comprising:
    ordering the plurality of IPMs in the list according to an estimated effectiveness of the respective IPMs for predicting a block of the picture.

2.  A method of processing one or more blocks of a picture, the method comprising:
    predicting a block of the picture using an intra prediction mode (IPM) from a list including a plurality of IPMs, wherein the IPMs in the list are ordered according to an estimated effectiveness of the respective IPMs for predicting the block.

3.  The method of claim 1 or 2, wherein an effectiveness of the plurality of IPMs is estimated using contextual information of the block.

4.  The method of any one of the preceding claims, wherein the estimated effectiveness of the plurality of IPMs is determined using one or more IPMs derived from reconstructed samples in a neighborhood of the block, e.g., one or more decoder-side intra mode derivation (DIMD) modes.

5.  The method of claim 4, wherein

    the estimated effectiveness of the plurality of IPMs is determined using an absolute difference between a primary DIMD mode and the respective IPMs, and
    the plurality of IPMs are ordered according to the absolute differences between the primary DIMD mode and the respective IPMs, e.g., in an ascending order.

6.  The method of claim 4, wherein the estimated effectiveness of each of the plurality of IPMs is determined using a plurality of absolute differences, each absolute difference being between the IPM and a respective one of a plurality of the derived IPMs.

7.  The method of claim 6, wherein the plurality of IPMs are ordered, e.g., in an ascending order, according to

    - a minimum of the plurality of absolute differences, or

- a linear combination of the plurality of absolute differences.

8. The method of claim 7, wherein respective weights for the linear combination are obtained for each of the derived IPMs during a DIMD process, e.g., using an amplitude of a Histogram of Gradient (HoG) of the DIMD.

9. The method of any one of the preceding claims, wherein the list is a non-most probable mode (non-MPM) list of IPMs including, e.g., 44 IPMs.

10. The method of any one of the preceding claims, wherein

the plurality of IPMs comprises M IPMs, and the list comprises M list indices, wherein the IPM having the $m^{th}$-highest estimated effectiveness is assigned to a $m^{th}$ list index, with m=1...M, and
an IPM to be used for the prediction of the block is signaled using the list index of the IPM.

11. The method of any one of the preceding claims, wherein the list comprises a plurality of sections, and an IPM to be used for a prediction of a block is signaled using a combination of a first indication and a second indication, wherein the first indication, like a flag, indicates the section of the list which the IPM belongs to, and the second indication, like a list index, indicates the position of the IPM within the section of the list.

12. The method of claim 11, wherein a code for signaling the second indication of a first section of the list has a first code length, and a code for signaling a second indication of the one or more remaining sections of the list has one or more second code lengths, and wherein the first code length is the shortest code length.

13. A non-transitory computer-readable storage medium comprising instructions which, when executed by a computer, cause the computer to carry out the method of any one of the preceding claims.

14. An apparatus of providing a list of a plurality of intra prediction modes (IPM) for predicting one or more blocks of a picture, the apparatus comprising:
a processing module, wherein the processing module is configured to order the plurality of IPMs in the list according to an estimated effectiveness of the respective IPMs for predicting a block of the picture.

15. A data stream having encoded thereinto a picture, wherein the data stream comprises:
a signaling of an intra prediction mode (IPM) for predicting a block of the picture, the IPM being from a list including a plurality of IPMs ordered according to an estimated effectiveness for a prediction, the signaling comprising:

- a first indication, like a flag, which indicates a section of the list which the IPM belongs to, and
- a second indication, like an list index, which indicates the position of the IPM within the section of the list.

**Input Video**

Pre-encode filtering

Transform

Quantization

Entropy Coding

Output bitstream
...011011110...

Inverse Quantization

Inverse Transform

Prediction

Intra Prediction

Inter Prediction

Motion Info

Motion Estimation

Loop Filter

Decoded Video Signal

Split into Blocks

104

102

100

106

114

108

110

116

118

110'

122

120

112

144

126

128

110''

130

110'''

134

140

142

138

136

124

Fig. 1

Fig. 2

Fig. 3

Fig. 4

ordering the plurality of IPMs in the list according to an
estimated effectiveness of the respective IPMs
for predicting a block of the picture

S100

Fig. 5

Fig. 6

Fig. 7

> predicting a block of the picture using an intra prediction mode (IPM)
> from a list including a plurality of IPMs ordered according to an
> estimated effectiveness of the respective IPMs for predicting the block

S400

Fig. 8

decoding from the encoded data stream the picture

predicting a block of the picture using an intra prediction mode (IPM)  from a list including a plurality of IPMs ordered according to an estimated effectiveness of the respective IPMs for predicting the block

S500

S502

Fig. 9

| receiving an original picture | S600 |

| encoding from the encoded data stream the picture |  |
| predicting a block of the picture using an intra prediction mode (IPM) from a list including a plurality of IPMs ordered according to an estimated effectiveness of the respective IPMs for predicting the block | S602<br>S604 |

including into a data stream a signaling of an IPM from the ordered list to be used for predicting a block of the picture — S606

Fig. 10

Processing Module

order the plurality of IPMs in the list according to
an estimated effectiveness of the respective IPMs
for predicting a block of the picture

302

304

300

Fig. 11

Processing Module

predict a block of the picture using an intra prediction mode (IPM) from a list including a plurality of IPMs ordered according to an estimated effectiveness of the respective IPMs for predicting the block

402

404

400

Fig. 12

| Decoder module |
| 502 |

| Processing module |
| 504 |

500

Fig. 13

Fig. 14

704

702

encoder

decoder

600

700

500

Fig. 15

Fig. 16

Europäisches Patentamt

European Patent Office

Office européen des brevets

## EUROPEAN SEARCH REPORT

**Application Number**

EP 24 31 5600

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SARWER M G ET AL: "CE3-related: Intra mode coding", 11. JVET MEETING; 20180711 - 20180718; LJUBLJANA; (THE JOINT VIDEO EXPLORATION TEAM OF ISO/IEC JTC1/SC29/WG11 AND ITU-T SG.16) , no. JVET-K0243 11 July 2018 (2018-07-11), XP030199429, Retrieved from the Internet: URL:http://phenix.int-evry.fr/jvet/doc_end_user/documents/11_Ljubljana/wg11/JVET-K0243-v2.zip JVET-K0243-v1.docx [retrieved on 2018-07-11] * the whole document * | 1-15 | INV. H04N19/11 H04N19/176 H04N19/593 H04N19/70 |
| X | WO 2019/137732 A1 (ERICSSON TELEFON AB L M [SE]) 18 July 2019 (2019-07-18) * paragraphs [0016], [0017], [0021], [0053] - [0059]; figure 1; table 1 * | 1-15 | |
| | | | TECHNICAL FIELDS SEARCHED (IPC) |
| X | US 2024/283924 A1 (JHU HONG-JHENG [US] ET AL) 22 August 2024 (2024-08-22) | 1-4,9-15 | H04N |
| A | * paragraphs [0225] - [0236] * | 5-8 | |
| | -/-- | | |

The present search report has been drawn up for all claims

| Place of search | Date of completion of the search | Examiner |
|---|---|---|
| Munich | 3 June 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Europäisches
Patentamt
European
Patent Office
Office européen
des brevets

Application Number

EP 24 31 5600

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN (HUAWEI) J ET AL: "Algorithm description for Versatile Video Coding and Test Model 1 (VTM 1)", 10. JVET MEETING; 20180410 - 20180420; SAN DIEGO; (THE JOINT VIDEO EXPLORATION TEAM OF ISO/IEC JTC1/SC29/WG11 AND ITU-T SG.16), no. JVET-J1002 16 June 2018 (2018-06-16), XP030198635, Retrieved from the Internet: URL:http://phenix.int-evry.fr/jvet/doc_end _user/documents/10_San Diego/wg11/JVET-J1002-v2.zip JVET-J1002-v2.doc [retrieved on 2018-06-16] * pages 1-3, paragraph 1 - paragraph 3.1 * ----- | 1-15 | |
| A | "High efficiency video coding", ITU-T STANDARD H.265 - SERIES H: AUDIOVISUAL AND MULTIMEDIA SYSTEMS, INTERNATIONAL TELECOMMUNICATION UNION, GENEVA ; CH , 13 February 2018 (2018-02-13), pages 1-689, XP044243431, Retrieved from the Internet: URL:http://mirror.itu.int/dms/pay/itu-t/re c/h/T-REC-H.265-201802-P!!PDF-E.pdf [retrieved on 2018-04-11] * pages 145-147, paragraph 8.4.2 * ----- | 1-15 | **TECHNICAL FIELDS SEARCHED (IPC)** |

The present search report has been drawn up for all claims

| Place of search | Date of completion of the search | Examiner |
|---|---|---|
| Munich | 3 June 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 31 5600

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| WO 2019137732 A1 | 18-07-2019 | NONE | |
| US 2024283924 A1 | 22-08-2024 | CN 118235401 A | 21-06-2024 |
| | | EP 4427457 A1 | 11-09-2024 |
| | | US 2024283924 A1 | 22-08-2024 |
| | | WO 2023081322 A1 | 11-05-2023 |

EPO FORM P0459

For more details about this annex : see Official Journal of the European Patent Office, No. 12/82